# EUROPÄISCHE PATENTSCHRIFT

(11) **EP 2 625 018 B1**
(45) Veröffentlichungstag und Bekanntmachung des Hinweises auf die Patenterteilung: **04.06.2014**
(21) Anmeldenummer: 11781990.4
(22) Anmeldetag: 03.10.2011
(51) Int. Cl.: B29C 45/42, B25J 15/06, B65G 47/91, B29C 45/76

(54) **VERFAHREN ZUM UMSCHLAG BZW. ZUR HANTIERUNG UND TRANSPORT VON WERKSTÜCKEN**
METHOD FOR HANDLING AND TRANSPORTING WORKPIECES
PROCÉDÉ DE TRANSFERT OU DE MANIPULATION ET DE TRANSPORT DE PIÈCES

(30) Priorität: 25.10.2010 AT 17772010; 06.10.2010 AT 16702010
(43) Veröffentlichungstag der Anmeldung: 14.08.2013
(73) Patentinhaber: Wittmann Kunststoffgeräte GmbH, 1220 Wien (AT)
(72) Erfinder: BANNACK, Erwin, A-2500 Baden (AT); PLEYER, Jürgen, A-1190 Wien (AT); RELLA, Johannes, A-2671 Payerbach (AT)
(74) Vertreter: Krause, Peter
(86) Internationale Anmeldenummer: PCT/AT2011/000409
(87) Internationale Veröffentlichungsnummer: WO 2012/045105

(56) Entgegenhaltungen:
- JP-A- 11 214 893
- US-A- 4 493 606
- US-A- 5 201 560
- US-A- 5 617 338

## Beschreibung

Die Erfindung betrifft ein Verfahren zum Umschlag bzw. zur Hantierung und Transport von Werkstücken, insbesondere zur Entnahme von Spritzgießartikeln aus einer Spritzgussmaschine, mit einem, eine programmierbare Steuer- und Regeleinheit und mindestens eine Saugdüse aufweisenden, Handhabungsautomaten, wobei zum Erfassen bzw. Ansaugen des Werkstückes ein, über die am Handhabungsautomaten, gegebenenfalls über einen Greifer, angeordnete Saugdüse erzeugter, Unterdruck verwendet wird. Ferner betrifft die Erfindung auch eine Einrichtung zur Durchführung des Verfahrens.

Die Problematik, die bei einer Entnahme von Werkstücken aus einer Spritzgussform gegeben sind, sind schon öfters angesprochen worden. So ist aus der EP 0 729 405 B1 die Entfernung einer optischen Platte von einer Spritzgießform mittels Unterdruck bekannt. Das Hauptaugenmerk wird in dieser Druckschrift auf eine Verkürzung der Handlingzeit gelegt, wobei eine Verminderung der Masse und eine Verkürzung des Weges für den Roboterarm angestrebt werden.

Auch aus der JP 11 214 893 A ist ein Verfahren bekannt, wobei eine Greifereinrichtung mittels Unterdruck gesteuert ist.

Weiters ist aus der WO 2007/010850 eine Steuervorrichtung für eine Formmaschine bekannt. Durch diese Steuervorrichtung wird der Betriebsmodus, in dem die Maschine betrieben wird, auf der Basis eines bestimmten Zustandes der Maschine eingestellt und betrieben. Gemäß den Ausführungen in dieser Druckschrift kann die Produktivität der geformten Produkte dadurch verbessert werden.

Aus der DE 1 604 598 A2 ist eine Vorrichtung zum Entformen von leichten Formlingen, insbesondere Kunststoffflaschen bekannt, bei der auch zur Entnahme aus dem Formwerkzeug Unterdruck Verwendung findet. Mit dieser Vorrichtung soll ein Entformen ohne manuelle Handhabung gewährleistet werden.

Ferner ist beispielsweise aus der DE 296 06 853 U1 eine Greifereinrichtung zur Entnahme von dünnwandigen Spritzgussteilen aus einem Spritzgusswerkzeug bekannt, wobei die Greifereinrichtung mit mehreren Sauggreifern versehen ist. Diese Greifereinrichtung soll eine unerwünschte Durchbiegung, insbesondere von CD-Hüllen, vermeiden.

Schließlich ist auch aus der DE 10 2005 061 193 A1 ein Handhabungsverfahren bekannt, wobei eine Bestückung der Maschine mit Produktionsteilen aus einem Produktionsteilspeicher mittels einer Handhabungsvorrichtung, der ein Bestückungsroboter zugeordnet ist, erfolgt.

Es ist, wie oben aufgezeigt, bekannt, dass Spritzgussartikel aus einer Spritzgussmaschine mittels Saugdüsen entnommen werden. Gerade bei älteren Spritzgussmaschinen tritt das Problem auf, dass der Öffnungshub nicht toleranzfrei ausgeführt wird, was es erschwert, das Werkstück mit dem Greifer zu erfassen. Ein nicht exaktes Erfassen des Werkstückes kann zu Produktionsmängel oder Produktionsunterbrechungen führen. Ebenso führt ein nicht exaktes Erfassen beim Handling von Spritzgussartikeln über Saugdüsen, beispielsweise beim Abbau eines Pufferstappels, zu Störungen im Produktionsablauf.

Aufgabe der Erfindung ist es daher, ein Verfahren der eingangs genannten Art zu schaffen, das einerseits die obigen Nachteile vermeidet und anderseits die Gesamtwirtschaftlichkeit der Anlage nicht reduziert.

Durch die Erfindung wird die Aufgabe gelöst.

Das erfindungsgemäße Verfahren ist dadurch gekennzeichnet, dass bei der Annäherung der Saugdüse an das Werkstück die Saugdüse aktiviert wird und der Unterdruck kontinuierlich bzw. permanent gemessen wird und bei Erreichen eines einstellbaren oder ermittelten Schwellwertes des Unterdruckes die Vorwärtsbewegung des Handhabungsautomaten, vorzugsweise in einem Bremsvorgang, gestoppt wird und das Werkstück von der Saugdüse angesaugt wird. Mit der Erfindung ist es erstmals möglich, die Form und das Werkstück exakt "zu finden" und schonungsvoll zu übernehmen. Die Bewegung des Handhabungsautomaten, auch Entformachse genannt, wird durch die Nutzung der, vorzugsweise analogen, Saugdüsen, auch Vakuumdüsen genannt, gesteuert. Das erfindungsgemäße Verfahren basiert darauf, dass bei einer Annäherung der Saugdüsen an das Werkstück der Unterdruck ansteigt. Der Unterdruck wird kontinuierlich oder permanent in kleinsten Zeiteinheiten gemessen. Bei Erreichen eines Schwellwertes des Unterdruckes, der beispielsweise bei 20 bis 40 Prozent des Ansaugunterdruckes liegt, wird die Bewegung des Handhabungsautomaten über die Steuer- und Regeleinheit gestoppt. Dieser Schwellwert des Unterdruckes bedeutet, dass die Saugdüse knapp vor der Berührung, beispielsweise etwa 0,5 bis 1 cm, vom Werkstück entfernt ist. Durch den vorprogrammierten Bremsweg des Handhabungsautomaten berührt bei seinem Bewegungsstillstand die Saugdüse das Werkstück und kann für den Transport angesaugt werden. Der Entformhub oder die Aufnahme des Werkstückes ist somit an keine fixe Position des Spritzguss-Werkzeuges gebunden. Durch diese flexible, jedoch genaue, Annäherung der Saugdüse zum Werkstück ist die Wahrscheinlichkeit einer Beschädigung des Werkstückes durch zu hohen Druck oder durch ein schlechtes Erfassen minimiert.

Natürlich liegt es auch im Rahmen der Erfindung das erfindungsgemäße Verfahren auch zum "Finden" der Teile beim Abstapeln aus einem Werkstück-Puffer einzusetzen.

Gemäß einem besonderen Merkmal der Erfindung erfolgt die Vorwärtsbewegung bzw. der Bremsvorgang nach Erreichen des Schwellwertes bis zum Stopp mit verzögerter Geschwindigkeit. Dadurch ist ein schonungsvolles Aufnehmen des Werkstückes gewährleistet. Aufgrund dieser schonungsvollen Werkstückaufnahme wird sich auch die Bezeichnung Smart-Vacuum in der einschlägigen Fachwelt für dieses erfindungsgemäße Verfahren einbürgern.

Nach einer Ausgestaltung der Erfindung wird der Unterdruck in einem Interwall von 4 Millisekunden gemessen. Im betriebsinternen Testlauf hat sich eine derartige Zeitspanne für die Messung als optimal heraus gestellt.

Gemäß einer weiteren besonderen Ausgestaltung der Erfindung erfolgt die Messung des Unterdruckes analog und dieser Messwert wird digitalisiert. Dadurch kann der Schwellwert der Steuer- und Regeleinheit problemlos zugeführt werden.

Nach einer Weiterbildung der Erfindung werden zur Programmierung der Steuer-und Regeleinheit des Handhabungsautomaten die Basis-Parameter, wie beispielsweise Umschlagstrecke bzw. Entnahmestrecke, Öffnungsweg der Spritzgussmaschine über ein Lernverfahren (teach-in) und beispielsweise Größe, Form, Gewicht, Lage und Oberflächenstruktur des Werkstückes für den Schwellwert empirisch ermittelt und eingegeben. Durch die Einbeziehung dieser Faktoren, auch zu sehen als Kalibrierung, ist das Verfahren individuell und für praktisch alle Spritzgussmaschinentypen anwendbar.

Der Erfindung liegt auch die Aufgabe zugrunde, eine Einrichtung zur Durchführung des Verfahrens zu schaffen.

Die erfindungsgemäße Einrichtung zur Durchführung der Verfahrens ist dadurch gekennzeichnet, dass der Handhabungsautomat mit einem, über eine programmierbare Steuer- und Regeleinheit beaufschlagbaren, Antrieb bewegbar ist, dass der, gegebenenfalls mit einem Greifer versehene, Handhabungsautomat mindestens eine Saugdüse mit einer Luftleitung aufweist und dass in der Luftleitung der Saugdüse eine Druckmessdose vorgesehen ist, deren Messwert der Steuer- und Regeleinheit zugeführt ist. Mit der erfindungsgemäßen Einrichtung ist es erstmals möglich, mit nur minimalstem Aufwand die Produktionsqualität immens zu steigern. Die Einschleifung einer Druckmessdose in den Saugleitungskreis verbindet tadellose Qualität mit hoher Zuverlässigkeit. Diese Innovation gewährleistet auch eine konsequente Funktionalität.

Die Erfindung wird an Hand eines Ausführungsbeispieles, das in der Zeichnung dargestellt ist, näher erläutert.

Es zeigt:
Fig. 1 schematisch einen Werkzeugraum einer Spritzgussmaschine mit dem Handhabungsautomaten und
Fig. 2 ein Diagramm des Entnahmevorganges des Handhabungsautomaten.

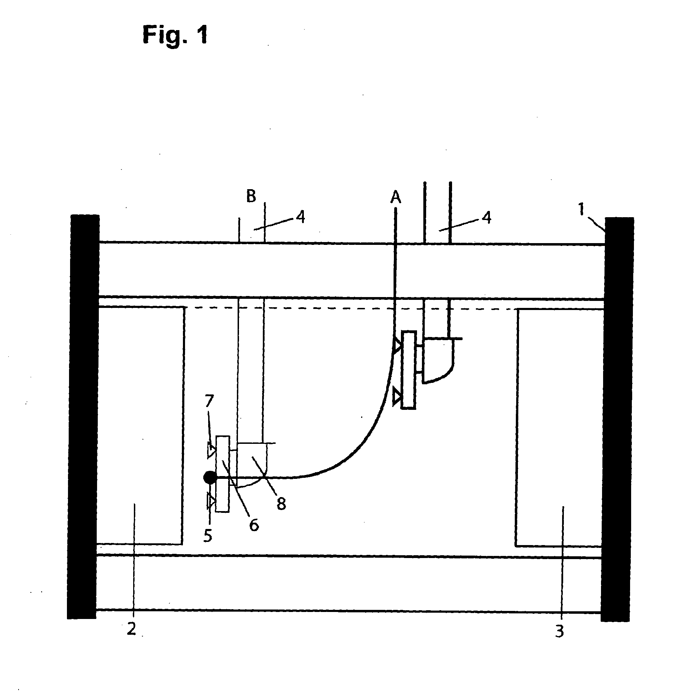

Gemäß der Fig. 1 ist eine Spritzgussmaschine 1 mit den offenen Formwerkzeughälften 2, 3 gezeigt. Ein Handhabungsautomat 4 wird in die offenen Werkzeughälften 2, 3 zur Entnahme eines Werkstückes 5 eingefahren. Die Stellung A des Handhabungsautomaten 4 ist der Eintritt in die offene Form.

In der Stellung B befindet sich der Handhabungsautomat 4 im Bereich des Werkstückes 5.

Der Handhabungsautomat 4 ist mit einem, über eine programmierbare Steuer-und Regeleinheit beaufschlagbaren, Antrieb bewegbar. Der Handhabungsautomat 4 ist mit einem Greifer 6 versehen und weist Saugdüse7 mit einer Luftleitung auf. In der Luftleitung der Saugdüse ist eine Druckmessdose 8 vorgesehen.

Bei einer Annäherung der Saugdüsen 7 an das Werkstück 5 werden die Saugdüsen 7 aktiviert. Je näher die Saugdüsen 7 sich dem Werkstück nähern, erhöht sich der Unterdruck -p. Dieser Unterdruck -p wird kontinuierlich bzw. permanent gemessen und bei Erreichen eines einstellbaren oder ermittelten Schwellwertes des Unterdruckes -p wird die Vorwärtsbewegung des Handhabungsautomaten 4, vorzugsweise in einem Bremsvorgang, gestoppt. Berühren die Saugdüsen 7 das Werkstück 5, wird das Werkstück 5 von den Saugdüsen 7 angesaugt. Der Messwert der Druckmessdose 8 wird der Steuer-und Regeleinheit zugeführt. Der Unterdruck -p kann in einem Interwall von 4 Millisekunden gemessen werden. Dabei erfolgt die Messung des Unterdruckes analog, wobei dieser Messwert zur Verarbeitung in der Steuer- und Regeleinheit digitalisiert wird.

Natürlich kann die Vorwärtsbewegung bzw. der Bremsvorgang nach Erreichen des Schwellwertes bis zum Stopp mit verzögerter Geschwindigkeit erfolgen.

Zur Programmierung der Steuer- und Regeleinheit des Handhabungsautomaten 4 werden die Basis-Parameter, wie beispielsweise Umschlagstrecke bzw. Entnahmestrecke, Öffnungsweg der Spritzgussmaschine über ein Lernverfahren (teach-in) und Größe, Form, Gewicht, Lage und Oberflächenstruktur des Werkstückes 5 für den Schwellwert empirisch ermittelt und eingegeben.

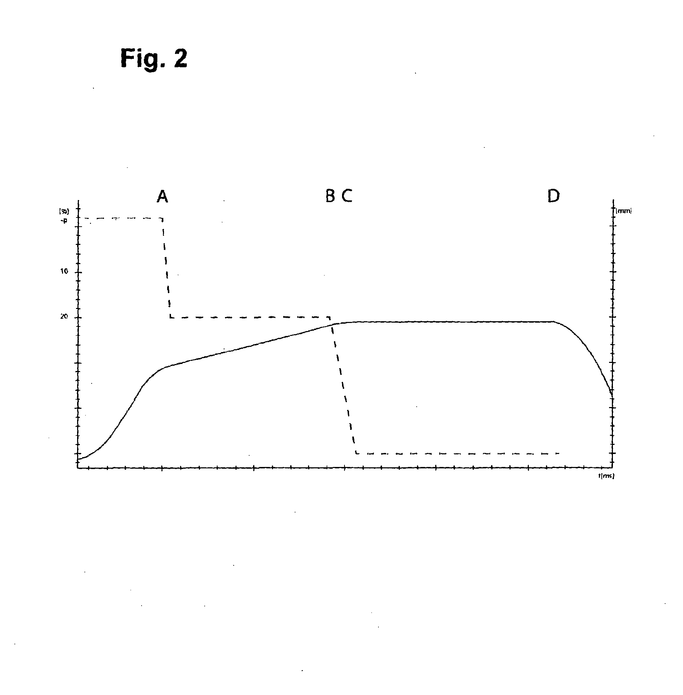

Gemäß der Fig. 2 ist in einem Diagramm einerseits -mit durchgehenden Strich-der Weg s des Handhabungsautomaten 4 über der Zeit t und anderseits der Unterdruck -p - strichliert - in Prozent % des Ansaugdruckes des Werkstückes über der Zeit t gezeigt.

Aus dem Diagramm ist ersichtlich, dass in der Eintrittsphase des Handhabungsautomaten 4, bis in den Bereich A, kein Unterdruck -p gegeben ist. Außerdem wird der Weg sehr rasch zurückgelegt. In diesem Bereich sind die Saugdüsen 7 noch nicht aktiviert, nähern sich jedoch dem Werkstück 5.

In der Stellung A werden die Saugdüsen 7 aktiviert, die Messungen beginnen und der Unterdruck -p erreicht annähernd den eingestellten Sollwert. Ab der Stellung A nähern sich die Saugdüsen 7 mit verminderter Geschwindigkeit dem Werkstück 5.

Etwa in der Stellung B nähern sich die Saugdüsen 7 dem Werkstück 5 weiter an und der Unterdruck -p steigt auf ca. 20 %. Wird dieser Wert als Schwellwert angenommen bzw. definiert, so setzt hier der Bremsvorgang des Handhabungsautomaten 4 ein. Der Unterdruck -p wird natürlich zum Entnahmevorgang größer. Durch die verzögerte Geschwindigkeit bis zum Stoppen ist eine schonungsvolle Entnahme - Bereich C - gewährleistet.

Im Bereich D wird das Werkstück 5 aus dem Werkzeugraum bzw. der Spritzgussform heraus gefahren.

## Patentansprüche

1. Verfahren zum Umschlag bzw. zur Hantierung und Transport von Werkstücken (5), insbesondere zur Entnahme von Spritzgießartikeln aus einer Spritzgussmaschine, mit einem, eine programmierbare Steuer- und Regeleinheit und mindestens eine Saugdüse (7) aufweisenden, Handhabungsautomaten (4), wobei zum Erfassen bzw. Ansaugen des Werkstückes (5) ein, über die am Handhabungsautomaten (4), gegebenenfalls über einen Greifer (6), angeordnete Saugdüse (7) erzeugter, Unterdruck verwendet wird, wobei in einer Luftleitung zur Saugdüse (7) eine Druckmessdose (8) vorgesehen ist, deren Messwert der Steuer- und Regeleinheit zugeführt ist, **dadurch gekennzeichnet, dass** bei der Annäherung der Saugdüse (7) an das Werkstück (5) die Saugdüse (7) aktiviert wird und der Unterdruck (-p) kontinuierlich bzw. permanent gemessen wird und bei Erreichen eines einstellbaren oder ermittelten Schwellwertes des Unterdruckes (-p) die Vorwärtsbewegung des Handhabungsautomaten (4), vorzugsweise in einem Bremsvorgang, gestoppt wird und das Werkstück (5) von der Saugdüse (7) angesaugt wird.

2. Verfahren nach Anspruch 1, **dadurch gekennzeichnet, dass** die Vorwärtsbewegung bzw. der Bremsvorgang nach Erreichen des Schwellwertes bis zum Stopp mit verzögerter Geschwindigkeit erfolgt.

3. Verfahren nach Anspruch 1 oder 2, **dadurch gekennzeichnet, dass** der Unterdruck (-p) in einem Interwall von 4 Millisekunden gemessen wird.

4. Verfahren nach einem oder mehreren der Ansprüche 1 bis 3, **dadurch gekennzeichnet, dass** die Messung des Unterdruckes (-p) analog erfolgt und dieser Messwert digitalisiert wird.

5. Verfahren nach einem oder mehreren der Ansprüche 1 bis 4, **dadurch gekennzeichnet, dass** zur Programmierung der Steuer- und Regeleinheit des Handhabungsautomaten (4) die Basis-Parameter, wie beispielsweise Umschlagstrecke bzw. Entnahmestrecke, Öffnungsweg der Spritzgussmaschine über ein Lernverfahren (teach-in) und beispielsweise Größe, Form, Gewicht, Lage und Oberflächenstruktur des Werkstückes (5) für den Schwellwert empirisch ermittelt und eingegeben werden.

## Claims

1. Method for handling and transporting workpieces (5), in particular for removing injection-moulded articles from an injection-moulding machine, with a handling machine (4) which has a programmable control and regulating unit and at least one suction nozzle (7), wherein in order to grasp or suck up the workpiece (5), use is made of a negative pressure (-p) generated via the suction nozzle (7) arranged on the handling machine (4), if appropriate via a gripper (6), wherein a pressure meter (8), the measured value of which is fed to the control and regulating unit, is provided in an air pipe to the suction nozzle (7), **characterised in that** when the suction nozzle (7) approaches the workpiece (5), the suction nozzle (7) is activated and the negative pressure (-p) is measured continuously or permanently and when a settable or determined threshold value of the negative pressure (-p) is reached, the forward movement of the handling machine (4) is stopped, preferably by a braking operation, and the workpiece (5) is sucked up by the suction nozzle (7).

2. Method in accordance with claim 1, **characterised in that** the forward movement or braking operation is carried out at decelerated speed up to the stop after the threshold value is reached.

3. Method in accordance with claim 1 or 2, **characterised in that** the negative pressure (-p) is measured at an interval of 4 milliseconds.

4. Method in accordance with one or more of claims 1 to 3, **characterised in that** the negative pressure (-p) is measured analog and this measured value is digitalized.

5. Method in accordance with one or more of claims 1 to 4, **characterised in that** for programming the control and regulating unit of the handling machine (4), the basic parameters, such as for example handling section or removal section, opening stroke of the injection-moulding machine, are determined via a learning process (teach-in), and for example size, shape, weight, position and surface structure of the workpiece (5), are determined empirically and entered for the threshold value.

## Revendications

1. Procédé de transbordement ou de manipulation et de transport de pièces d'oeuvre (5), et plus particulièrement de prélèvements de pièces moulées par injection dans une machine de moulage par injection à l'aide d'une unité de commande et de réglage et d'un automate de manipulation (4) doté d'au moins une buse d'aspiration (7), ladite buse (7) fixée le cas échéant à l'automate de manipulation (4) au-dessus d'une griffe (6) créant un vide partiel; dans une conduite d'air menant à la buse d'aspiration (7), un dynamomètre (8) est prévu, dont les valeurs de mesures sont transmises à l'unité de commande et de réglage, ladite unité est **caractérisée par le fait que** la buse d'aspiration (7) est activée lors de son approche de la pièce d'oeuvre (5), ainsi que **par le fait que** le vide partiel (-p) est mesuré d'une manière continue ou en permanence, et qu'après atteinte d'une valeur seuil - réglable ou déterminée - du vide partiel (-p), le mouvement en avant de l'automate de manipulation (4) est interrompu de préférence en freinant, et que la pièce d'oeuvre (5) est alors aspirée par la buse d'aspiration (7).

2. Procédé selon la revendication n° 1 **caractérisé par le fait que** la vitesse du mouvement en avant ou le freinage est réduite après atteinte de la valeur seuil jusqu'à l'arrêt complet.

3. Procédé selon les revendications 1 ou 2 **caractérisé par le fait que** le vide partiel (-p) est mesuré selon un intervalle de 4 millisecondes.

4. Procédé selon l'une des revendications 1 à 3 ou selon plusieurs de ces revendications, **caractérisé par le fait que** le mesurage du vide partiel (-p) se fait par voie analogique et que la valeur mesurée est numérisée.

5. Procédé selon l'une des revendications 1 à 4 ou selon plusieurs de ces revendications, **caractérisé par le fait que** les paramètres de base sont empiriquement déterminés pour obtenir la valeur seuil, et introduits pour la programmation de l'unité de commande et de réglage de l'automate de manipulation (4); on entend par « paramètres de base » par exemple la course de transbordement ou de prélèvement, la course d'ouverture de la machine de moulage par injection qui est déterminée au cours d'une procédure d'apprentissage (teach-in), la taille, la forme, le poids, la position et la structure de la surface (5).
